# FASCICULE DE BREVET EUROPEEN

(11) **EP 0 928 918 B1**
(45) Date de publication et mention de la délivrance du brevet: **20.08.2003**
(21) Numéro de dépôt: 99400007.3
(22) Date de dépôt: 05.01.1999
(51) Int. Cl.: F16K 21/10

(54) **Robinet à fermeture temporisée**
Verzögert schliessendes Ventil
Delayed closing valve

(30) Priorité: 09.01.1998 FR 9800143
(43) Date de publication de la demande: 14.07.1999
(73) Titulaire: LES ROBINETS PRESTO Société anonyme dite:, 92120 Montrouge (FR)
(72) Inventeur: Dutheil, Daniel, 17132 Meschers (FR)
(74) Mandataire: Vander-Heym, Serge

(56) Documents cités:
- EP-A- 0 021 957
- EP-A- 0 333 526
- CH-A- 5 594
- FR-A- 474 649
- FR-A- 475 960
- FR-A- 2 492 942

## Description

La présente invention est relative à des perfectionnements aux robinets à fermeture temporisée de sécurité du genre de ceux dont l'enfoncement d'un bouton-poussoir détermine le soulèvement du clapet, l'écoulement de l'eau et simultanément la vidange d'une chambre de temporisation dans laquelle se déplace un piston, portant ledit clapet, le remplissage de ladite chambre s'effectuant par l'entremise d'un orifice calibré permettant de temporiser le déplacement dudit clapet repoussé vers son siège par l'entremise d'un ressort.

Un tel dispositif est, systématiquement, utilisé sur les robinets de la demanderesse et est décrit dans de nombreux brevets tels que, par exemple, dans le brevet européen N°333526 ou celui N°21957.

Ce dispositif est fiable et simple, mais présente un inconvénient. En effet, si l'usager maintient le bouton-poussoir enfoncé, l'eau s'écoule et la temporisation de la fermeture est empêchée.

Pour remédier à cet inconvénient on a imaginé des dispositifs de sécurité selon lesquels le fait de maintenir le bouton poussoir enfoncé était sans effet sur le début de la temporisation. Un tel dispositif est décrit dans le brevet français N°2492942. Ce dernier donne satisfaction, toutefois, il est relativement compliqué et encombrant.

Le robinet de l'invention remédie à ces inconvénients au moyen des caractéristiques de la deuxième partie de la revendication 1. Lors du soulèvement du clapet, l'eau s'écoule en traversant, axialement, la queue du piston portant ledit clapet, l'orifice de sortie pouvant être obturé par une membrane déformable.

Lorsqu'on appuie sur la membrane, on repousse le piston et simultanément on obture l'orifice central de la queue, l'eau ne peut pas traverser le robinet et la temporisation ne peut pas s'effectuer : l'ensemble est bloqué, rien ne se passe. En relâchant la membrane, l'eau peut s'écouler et la temporisation peut s'effectuer.

La présente invention sera mieux comprise par la description qui va suivre faite en se référant aux dessins annexés à titre d'exemple indicatif, seulement, sur lesquels :

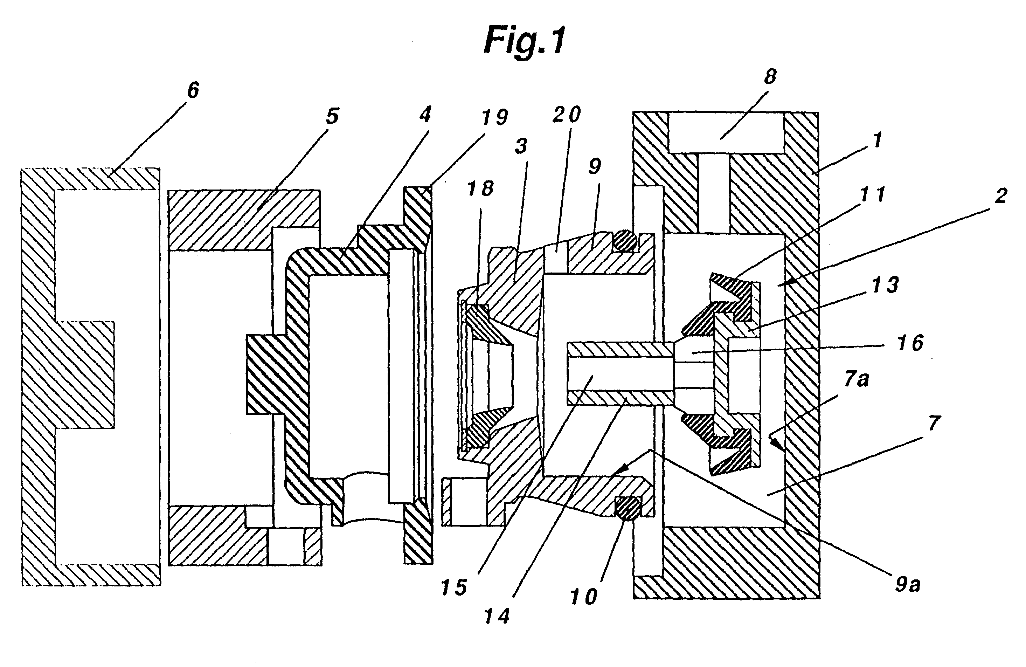

- la figure 1 est une vue en coupe éclatée montrant les principales pièces du robinet de l'invention;
- la figure 2 est une vue en coupe verticale du robinet, celui étant représenté en position fermée;
- la figure 3 est une vue, analogue à celle 2, le robinet étant représenté en position dite de sécurité, c'est-à-dire dans la position où, l'eau ne peut pas s'écouler bien que le clapet soit soulevé;

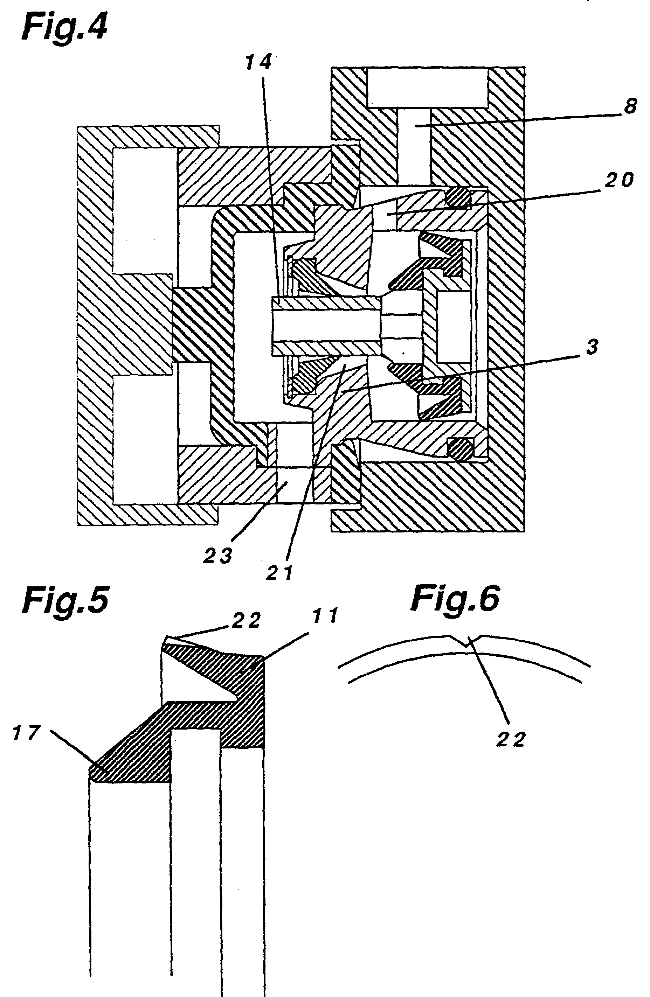

- la figure 4 est une vue analogue à celle 3, l'usager ayant relâché son action;
- la figure 5 est une vue en coupe du clapet;
- la figure 6 est la vue de gauche, partielle, de la figure 4.

Dans ce qui va suivre, on va décrire un robinet amorceur, c'est-à-dire un robinet temporisé permettant, pendant un temps préderminé, de mettre la chambre de temporisation d'un autre robinet, tel qu'un robinet de douche, en communication avec l' atmosphère pour assurer la vidange complète de ladite chambre.

En se reportant aux dessin on voit que le robinet se compose des principales parties suivantes : un corps 1, un piston 2, un siège 3, une membrane élastiquement déformable 4,en forme de cloche, un flasque de fixation 5, tubulaire, et, éventuellement, un bouton-poussoir 6.

Le corps 1, qui se fixe , par exemple, contre une cloison à l'aide de pattes latérales de fixation d'un type connu, présente une cavité 7, communiquant avec l'arrivée d'eau par l'entremise d'un orifice 8.

Le siège 3 présente une extension tubulaire 9, s'ajustant, par l'entremise d'un joint 10, dans la cavité 7. Le piston 2 est guidé, par l'entremise de sa jupe élastiquement déformable 11, dans l'extension précitée, la chambre de temporisation 12 étant formée par le fond 7a de la cavité 7, la surface latérale interne 9a de l'extension 9 et ledit piston.

Le piston 2, se compose d'une tête 13, sur laquelle est montée la jupe 11, et d'une queue tubulaire 14, présentant un canal axial 15. La tête 13 présente des orifices 16 comuniquant avec le canal 15.

Selon une caractéristique de l'invention , le clapet usuel 17 est moulé d'une seule pièce avec la jupe 11.

La queue 14 traverse le siège 3 par l'entremise d'un joint 18, dont la configuration particulière est montrée sur les dessins.

Le siège 3 est recouvert par la membrane 4, en forme de cloche, présentant une colerette périphérique 19 maintenue appliquée contre le corps 1 par l'entremise du flasque de fixation 5. La fixation du flasque 5, sur le corps 1, est assurée par l'entremise de pattes latérales d'un type connu et non représentées.

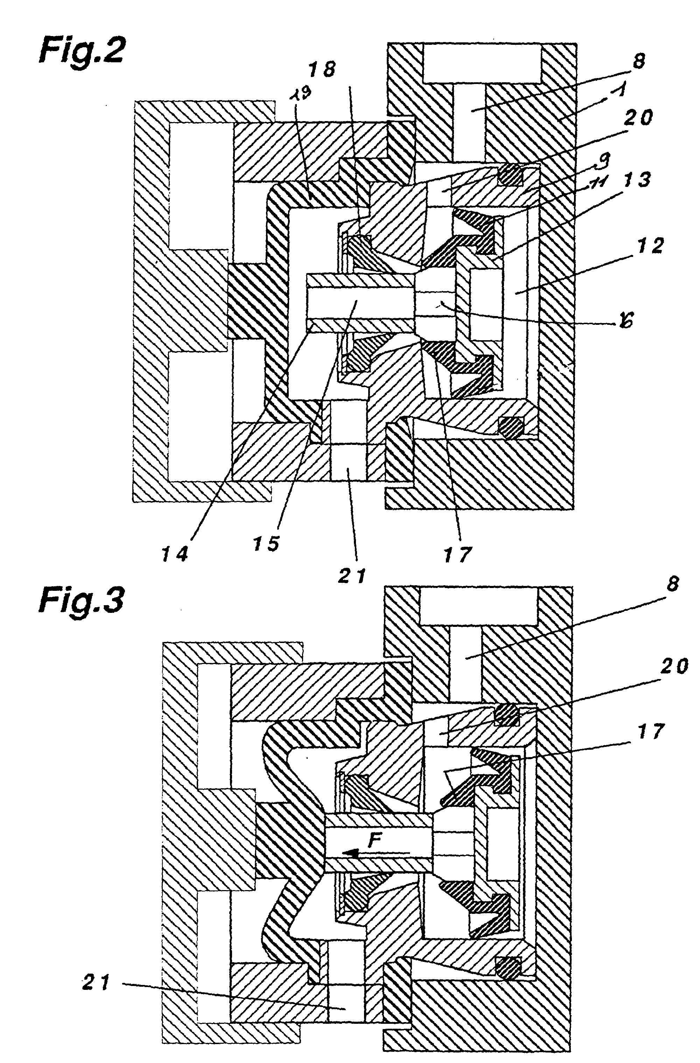

Dans la position représentée sur la figure 2, le robinet est fermé. L'eau qui pénétre dans le corps 1 par l'orifice 8 pénètre ensuite dans l'extension 9 par des trous 20 et est retenue par le clapet 17.

Pour ouvrir le robinet, il faut repousser le piston 2 en agissant sur le bouton-poussoir 6. Si on maintient le poussoir enfoncé, on empêche le déplacement du piston, selon la flèche F, donc le début de la temporisation, mais simultanément on empêche la circulation de l'eau puisque le canal axial est bouché : c'est la position montrée sur la figure 3.

Si l'usager relâche son action sur le poussoir 6, la membrane 4 se détend, repousse ledit poussoir et l'eau peut s'écouler par le canal 15 et être évacuée à l'extérieur par les orifices 21.

Comme à ce moment, le piston est libre de se déplacer, l'eau qui pénètre dans la chambre de temporisation, par un orifice calibré selon la technique connue, permet le déplacement du clapet 17 qui est repoussé contre son siège par l'entremise du ressort usuel (non représenté).

Selon une caractéristique de l'invention, l'orifice calibrée précité est formé par la coopération d'une petite encoche 22 prévue à la périphérie de la jupe 11 du piston et la paroi latérale interne de la chambre de temporisation.

Cette disposition présente de nombreux avantages par rapport aux dispositifs connus du genre de ceux utilisant un fil calibré traversant un orifice faisant communiquer l'arrivée d'eau et la chambre de temporisation, ledit fil étant agencé de façon à pouvoir, périodiquement, être déplacé axialement. Parmi les avantages, il faut citer, notamment, la facilité de réalisation, la simplification du piston et le gain de place. Ces avantages sont très importants lorsqu'il s'agit d'un robinet amorceur dont le volume doit être réduit, notamment pour des raisons esthétiques, et le prix de revient aussi bas que possible.

Il faut signaler que ce robinet de sécurité peut facilement être transformé en robinet ordinaire par la suppression du joint spécial 18. Si ce joint est supprimé, et bien que l'usager maintienne le poussoir enfoncé, l'eau s'écoulera par l'espace annulaire 23 ménagé entre le siège et la queue 14. Il est donc ainsi possible d'offrir à l'utilisateur deux robinets différents bien que constitués de pièces identiques, d'où une possibilité de rationalisation de la fabrication.

## Revendications

1. Robinet, à fermeture temporisée, comprenant un clapet (17) porté par un piston (2) ce dernier pouvant être déplacé par un bouton-poussoir (6) de manière à déterminer une arrivée d'eau (8) et simultanément la vidange d'une chambre de temporisation (12) dans laquelle se déplace le piston, le remplissage de ladite chambre de temporisation (12) s'effectuant par l'entremise d'un orifice calibré permettant de temporiser le déplacement dudit clapet repoussé vers son siège par l'intermédiaire d'un ressort, **caractérisé en ce que** le piston se prolonge, à l'opposé de sa tête (13), par une queue tubulaire (14) traversant le siège usuel et par laquelle l'eau s'écoule lorsque le clapet (17) est soulevé, et qu'il comprend une membrane élastiquement déformable située entre le bouton-pressoir et la queue tubulaire du piston ladite queue pouvant être obturée par la déformation de ladite membrane (4) sur laquelle l'usager exerce une pression pour soulever le clapet.

2. Robinet selon la revendication 1, **caractérisé en ce que** la membrane affecte la forme d'une cloche et obture, de façon étanche, la cavité (7) du corps contenant le piston (2) et le siège (3), ladite membrane comportant une collerette (19) maitenue contre ledit corps par un flasque tubulaire (5).

3. Robinet selon l'une quelconque des revendications 1 et 2, **caractérisé en ce que** la queue du piston traverse le siège par l'entremise d'un joint (18).

4. Robinet selon l'une quelconque des revendications 1 à 3, **caractérisé en ce que** l'orifice calibré faisant communiquer l'arrivée d'eau avec la chambre de temporisation est formé par la coopération d'une encoche (22), prévue sur la jupe (11), et da la paroi latérale interne de ladite chambre de temporisation.

5. Robinet selon l'une quelconque des revendications 1 à 4, **caractérisé en ce que** le clapet (17) est moulé d'une seule pièce avec la jupe (11) montée sur le tête (13) du piston (2).

## Patentansprüche

1. Hahn mit verzögertem Verschluss mit einer durch einen Kolben (2) getragenen Verschlussklappe (17), wobei letzterer durch einen Druckknopf (6) derart verschoben werden kann, dass eine Wasserzuleitung (8) und gleichzeitig das Entleeren einer Verzögerungskammer (12) bestimmt wird, in der der Kolben verschoben wird, wobei das Auffüllen der besagten Verzögerungskammer (12) mittels einer die Verzögerung der Verschiebung der besagten mittels einer Feder zu ,ihrem Sitz zurückgeschobenen Verschlussklappe erlaubenden kalibrierten Öffnung erfolgt, **dadurch gekennzeichnet, dass** sich der Kolben gegenüber seinem Kopf (13) durch ein den üblichen Sitz durchquerendes röhrenförmiges Endstück (14) verlängert, durch das das Wasser hindurchfließt, wenn die Verschlussklappe (17) angehoben ist dass und er eine sich zwischen dem Druckknopf und dem röhrenförmigen Endstück des Kolbens b efindende elastisch v erformbare Membran (4) u mfasst, w obei d as b esagte E ndstück durch die Verformung der besagten Membran (4) verschlossen werden kann, auf die der Anwender einen Druck zum Anheben der Verschlussklappe ausübt.

2. Hahn gemäß Anspruch 1, **dadurch gekennzeichnet, dass** die Membran die Form einer Glocke annimmt und dicht die Aushöhlung (7) des den Kolben (2) und den Sitz (3) enthaltenden Körpers verschließt, wobei die besagte Membran eine durch einen röhrenförmigen Flansch (5) gegen den besagten Körper gehaltene Auskragung (19) umfasst.

3. Hahn gemäß Anspruch 1 und 2, **dadurch gekennzeichnet, dass** das Endstück des Kolbens den Sitz durch eine Dichtung (18) durchquert.

4. Hahn gemäß Anspruch 1 bis 3, **dadurch gekennzeichnet, dass** die die Wasserzuleitung mit der Verzögerungskammer verbindende kalibrierte Öffnung durch das Zusammenwirken einer auf der Schürze (11) vorgesehenen Kerbe (22) und der lateralen Innenwand der besagten Verzögerungskammer gebildet wird.

5. Hahn gemäß Anspruch 1 bis 4, **dadurch gekennzeichnet, dass** die Verschlussklappe (17) mit der auf dem Kopf (13) des Kolbens (2) angebrachten Schürze (11) aus einem einzigen Stück gegossen ist.

## Claims

1. Tap with time-delayed closing and including a clack valve (17) borne by a piston (2), the latter being able to be moved by a push-button (6) so as to determine a water intake (8) and simultaneously the draining of a time delay chamber (12) in which the piston moves, the filling of said time delay chamber (12) being effected by inserting a calibrated orifice able to time delay the movement of said clack valve pushed back towards its seat by means of a spring, **characterised in that** the piston is extended opposite its head (13) by a tubular tail (14) traversing the normal seat and by which the water flows when the clack valve (17) is lifted up and **in that** it includes an elastically ductile membrane (4) situated between the push-button and the tubular tail of the piston, said tail being able to be sealed off by warping of said membrane (4) on which the user exerts pressure so as to lift up the clack valve.

2. Tap according to claim 1, **characterised in that** the membrane simulates the shape of a bell and seals off the cavity (7) of the body containing the piston (2) and the seat (3), said membrane including a plunged boss (19) kept against said body by a tubular flange (5).

3. Tap according to claim 1 or 2, **characterised in that** the tail of the piston traverses the seat via the insertion of a joint (18).

4. Tap according to one of claims 1 to 3, **characterised in that** the calibrated orifice making the water intake communicate with the time delay chamber is formed by the cooperation of a notch (22) provided on the skirt (11) and the internal lateral wall of said time delay chamber.

5. Tap according to one claims 1 to 4, **characterised in that** the clack valve (17) is moulded in the form of a single piece with the skirt (11) mounted on the head (13) of the piston (2).
